(19) **Europäisches Patentamt / European Patent Office / Office européen des brevets**

(11) **EP 4 621 694 A1**

(12) **EUROPEAN PATENT APPLICATION**

(43) Date of publication:
24.09.2025 Bulletin 2025/39

(21) Application number: 24164190.1

(22) Date of filing: 18.03.2024

(51) International Patent Classification (IPC):
**G06Q 30/0242** *(2023.01)*

(52) Cooperative Patent Classification (CPC):
**G06Q 30/0245**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **LoopMe Innovation Limited**
**London EC1M 4AH (GB)**

(72) Inventors:
• **Newnham, Leonard**
 **London, EC1N 8FH (GB)**
• **Loktionova, Yuliia**
 **London, EC1N 8FH (GB)**

(74) Representative: **Haseltine Lake Kempner LLP**
**One Portwall Square**
**Portwall Lane**
**Bristol BS1 6BH (GB)**

(54) **APPARATUS AND METHOD FOR FORMING A CONTROL GROUP**

(57) In an example, a measurement platform comprises a memory and processing circuitry configured to provide a control group module and a survey module. The memory comprises profile storage configured to store a plurality of end user identifiers associated with end user profiles comprising a set of features associated with the end user. The control group module is configured to receive exposure notifications indicating that predetermined data has been exposed to end users, to determine user profiles associated with exposed end user identifiers and to determine a control group of user identifiers associated with profiles comprising similar features to exposed end user profiles but not comprising the exposed end user identifiers. The survey module is configured to send a request for a response to end user devices associated with exposed and control group end user identifiers, compare responses received from exposed end users with responses received from control group end users and determine, based thereon, an indication of an effect of the predetermined data on the exposed end users.

Fig. 3

EP 4 621 694 A1

## Description

Examples herein relate to systems and methods for forming a control group after at least part of an exposed group has been defined. The control group and the exposed group may be used in analysing data.

SUMMARY OF INVENTION

According to one aspect of the invention, a measurement platform comprises a memory and processing circuitry configured to provide a control group module and a survey module. The memory comprises profile storage configured to store a plurality of end user identifiers associated with end user profiles, each end user profile comprising a set of features associated with the end user. The control group module is configured to receive, from each end user device of an exposed group of end user devices, an exposure notification indicating that predetermined data has been exposed to a user thereof and comprising an identifier of an exposed end user; to determine user profiles associated with exposed end user identifiers; and to determine, based on the profiles, a control group of user identifiers associated with profiles comprising similar features to the features of profiles associated with the exposed end user identifiers but not comprising identifiers of the exposed end users. The survey module is configured to send a request for a response to each of a plurality of surveyed end user devices associated with end user identifiers comprising exposed end user identifiers and control group end user identifiers, wherein the request for a response comprises a request for a response to the predetermined data; receive a response to the request from each of a plurality of surveyed end user devices; compare a set of responses received from exposed end users with a set of responses received from control group end users; and determine, based on the comparison, an indication of an effect of the predetermined data on the exposed end users.

This may allow a control group to be determined with characteristics which match a group to whom the predetermined data has actually been exposed, allowing for accurate conformity between the groups. Moreover, it may allow for an objective assessment of the effect of the predetermined data based on a control group which is appropriately configured in response to an actual exposed group.

In some examples, the control group module 106 is configured to determine the plurality of control group user identifiers by selecting at least one control group user identifier as comprising part of a control group; evaluating a measure of a difference between the representation of features in the selected control group relative to the exposed group; and selecting a further user identifier to comprise part of the control group so as to reduce a determined difference. For example, a difference may be minimised given a predetermined pool of candidate control group identifiers.

The steps of evaluating the measure of a difference and selecting a further user identifier may be carried out iteratively, for example until the control group reaches a predetermined size. Such methods may allow the control group to be formed iteratively while continually 'correcting for errors' between the characteristics of the groups. This promotes conformity between the groups.

In some examples, the control group module is configured to evaluate the measure of the difference by evaluating an extent to which the at least one feature is over represented or underrepresented in the selected control group relative to the exposed group by assigning values to an index vector representing a plurality of features of the profiles based on a comparison between (i) the representation of each feature within the profiles associated with the exposed end users and (ii) the representation of each feature within the profiles associated with a first set of control group end users. In examples where end user profiles comprise, or are processed to provide, binary feature vectors, wherein each element of the binary feature vector is representative of an attribute (e.g. a feature) of the associated end user and is associated with a value of 0 or 1, this may comprise evaluating the index vector according to an equation:

$$\text{index\_vector}_i = \log\left(\frac{(\text{expCount}_i * \text{numConBFVectors})}{(\text{conCount}_i * \text{numExpBFVectors})}\right)$$

wherein:

numConBFVectors = number of binary feature vectors representing profiles corresponding to the control end user identifiers comprised in the control group;
numExpBFVectors = number of binary feature vectors representing profiles corresponding to the end user identifiers comprised in the exposed group;
$\text{expCount}_i$ = a count of 1's comprised in an ith element of exposed binary feature vectors; and
$\text{conCount}_i$ = a count of 1's comprised in respective ith element of control binary feature vectors.

It may be noted that this vector compares the proportional representation of features in the exposed group ($\text{expCount}_i$/numExpBFVectors) to the proportional representation of features in the control group ($\text{conCount}_i$/numConBF-

Vectors).

The control group module may be further configured to select the further user identifier to comprise part of the control group by determining a dot product between each of a plurality of candidate control group end user profile vectors and the index vector; and adding the candidate control group end user associated with the highest dot product result to the first set of control group end users. The use of the logarithmic function to evaluate the index feature elements may result in a high negative element value when an element is not represented in the exposed group, which may in turn make it unlikely that a vector including such a feature will be included in the control group, as is further set out below.

In some examples, the measurement platform comprises a data dissemination module configured to send the predetermined data to a first plurality of end user devices. The data dissemination module may be configured to insert tracking code into the predetermined data prior to sending the predetermined data to the first plurality of end user devices, wherein the tracking code is to cause the end user device to send the exposure notification.

In some examples, the measurement platform is configured to, based on the indication of an effect of the predetermined data on the exposed end users, send a recommendation based on the indication to a data dissemination entity (e.g. the data dissemination module). In other examples, the measurement platform is configured to, based on the indication of an effect of the predetermined data on the exposed end users, send an instruction based on the indication to a data dissemination entity. In other examples, the measurement platform may directly control the dissemination of the predetermined data. The measurement platform may for example cause, or cause the data dissemination entity, to carry out one or more of the following: stop dissemination of the predetermined data, change a content of the predetermined data, change a time of day at which the predetermined data is sent, change a feature set on which the end users to whom the predetermined data is sent is based, cause the predetermined data to be further disseminated. If a recommendation is sent, it may comprise a recommendation to carry out one or more of these actions.

In some examples herein each end user profile comprises a binary feature vector, wherein each element of the binary feature vector is representative of an attribute (e.g. a feature) of the associated end user and is associated with a value of 0 or 1. In some examples, the control group module is further configured to convert user profiles to provide such vectors, for example using one-hot encoding. This may comprise converting profiles associated with exposed end user identifiers and/or profiles associated with candidate control group user identifiers. This may provide profiles which are compatible with certain methods set out herein.

In some examples, the control group module is further configured to determine a control group pool comprising a plurality of candidate control group user identifiers. The size of the control group pool may for example be determined based on the number of exposed end user identifiers, for example being a multiple thereof. This allows for an appropriate trade-off between computational efficiency and the conformity between the characteristics of the exposed group and the control group. In some examples, profiles associated with control group pool identifiers may be retrieved from a bulk memory to a local memory of the platform, for example to the memory comprising part thereof. This allows for efficient storage of the profiles.

The control group module may iteratively update the control group as exposure notifications are received. This allows the control group to be updated in 'real time' as the predetermined data is disseminated, and allows for a timely assessment of the effect of the predetermined data to be made.

According to a second aspect of the invention, a method for determining a control group of end user devices comprises, by processing circuitry, receiving, from each end user device of an exposed group of end user devices, an exposure notification indicating that predetermined data has been exposed to a user thereof and comprising an identifier of an exposed end user; determining user profiles associated with the exposed end user identifiers, each end user profile comprising a set of features associated with the end user; determining, based on the profiles, a plurality of control group user identifiers associated with profiles comprising similar features to the features associated with the exposed end user identifiers but not comprising the exposed end user identifiers; sending a request for a response to each of a plurality of surveyed end user devices associated with end user identifiers comprising exposed end user identifiers and control group end user identifiers, wherein the request for a response comprises a request for a response to the predetermined data; receiving a response to the request from each of a plurality of surveyed end user devices; comparing a set of responses received from exposed end users with a set of responses received from control group end users; and determining, based on the comparison, an indication of an effect of the predetermined data on the exposed end users.

At least part of the method may be performed iteratively such that the size of the exposed group of end user devices and the size of the control group of end users grow alternately.

According to a third aspect of the invention, there is provided a non-transitory machine readable medium encoded with instructions which, when executed, cause a processor to carry out the method of the second aspect.

Further features of the aspects of the invention are set out below and in the accompanying claims.

BRIEF DESCRIPTION OF THE FIGURES

The Figures depict various embodiments for purposes of illustration only. One skilled in the art will readily recognise from the following discussion that alternative embodiments of the apparatus and methods illustrated herein may be employed without departing from the principles described herein.

Figure 1 is a schematic drawing of an example measurement platform;
Figure 2 is a schematic drawing of an example system comprising a measurement platform;
Figure 3 shows a flow chart of an example method for forming and utilising a control group;
Figure 4 shows a flow chart of an example method for forming a control group;
Figure 5 shows a flow chart of an example method for forming a control group;
Figure 6 is a schematic drawing of an example memory in conjunction with a processor; and
Figure 7 is a bar graph representing experimental results of an experiment measuring performance of an embodiment of the invention relative to other exemplary processes.

DETAILED DESCRIPTION

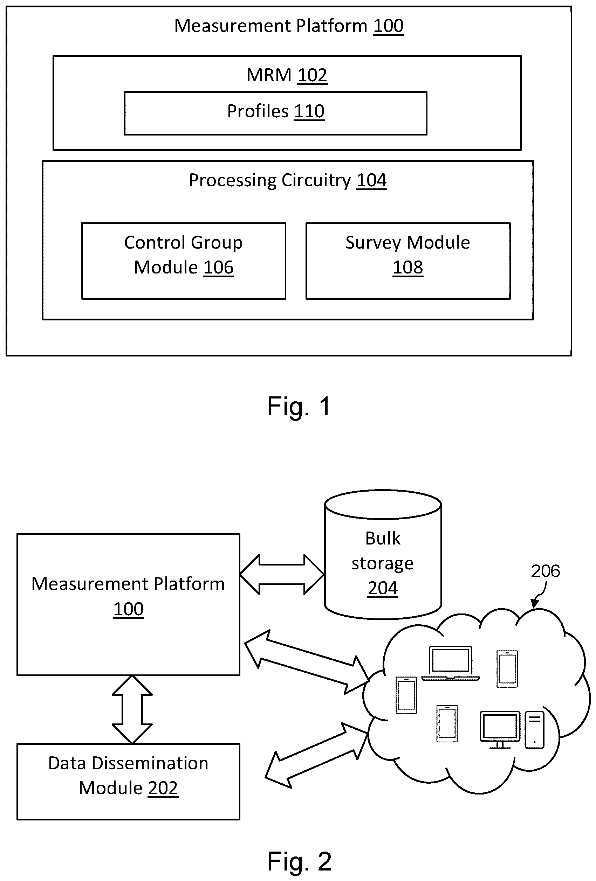

Figure 1 shows a schematic drawing of a measurement platform 100 comprising a Machine Readable Medium (MRM) 102 and processing circuitry 104. The processing circuitry 104 comprises a control group module 106 and a survey module 108. Each module 106, 108 may be implemented by one or more processors executing machine readable instructions stored in a MRM (which may comprise the MRM 102), or by one or more processors operating in accordance with instructions embedded in processing circuitry. The actions ascribed to a module 106, 108 may all be performed by a single processor or divided amongst several processors. The term 'processor' is to be interpreted broadly to include a CPU, processing unit, ASIC, logic unit, programmable gate array etc.

In this example, the MRM 102 comprises profile storage 110, which is configured to store a plurality of end user identifiers associated with end user profiles, each end user profile comprising a set of features associated with the end user. In some examples, there may be thousands, hundreds of thousands or millions of profiles. The MRM 102 may comprise memory. Each profile may be associated with a plurality of features, for example at least 10 features, at least 20 features, at least 50 features or the like. In other examples, there may be many more features.

A feature may comprise one or more of end user device information, a property of the end user and/or a characteristic of the end user. For example, the features may comprise one or more of end user device information, end user demographic information, end user behavioural information, end user location, end user interests and preferences, end user browsing history, or the like.

For example, end user device information may comprise one or more of a device type, a device operating system, a device screen size, a device storage capacity, a device memory capacity, a device brand, a device application requesting data, or the like.

For example, the end user demographic information may comprise one or more of age, gender, marital status, location, income level, and other demographic factors. For example, the end user behavioural information may comprise one or more of online behavioural information and offline behavioural information. For example, the online behavioural information may comprise one or more of a web page visited by the end user, content with which the end user engages, the end user's interaction pattern, a time of day at which the end user is on line, and/or other behavioural information providing insights into the user's online behaviour. For example, the interaction may comprise one or more of an interaction with a mobile app, an interaction with a website, an interaction with another end user, and an interaction with data. For example, the interaction with a mobile app may comprise one or more of a screen that the end user views, an action that the end user performs, and another interaction. For example, an interaction with a website may comprise one or more of a page that the end user views, an action that the end user performs on the website, and another interaction with the website. For example, the end user interests and preferences may comprise one or more of the end user's interests, the end user's preferences, and the end user's affinities. One or more of the end user's interests, the end user's preferences, and the end user's affinities may be determined or derived based on their online activities. For example, end user browsing history may comprise one or more of information about the end user's past interactions online and the end user's browsing history online. For example, the browsing history may comprise one or more of a website that the end user visits, a web page that the end user views, a product that the end user views, and a search that the end user conducts.

In some examples, the features may comprise data which has been previously acquired regarding an end user and/or their device. In some examples, the features may comprise features associated with the methods and apparatus described herein, such as an interface (e.g. web browser, app or the like) through which particular data (referred to herein as 'predetermined data') was exposed.

In some examples, the end user profile comprises a set of feature-value pairs that stores some or all known data regarding the end user. For example, city=London, operating_system=iOS, additionally for example gender=female, and the like.

For example the features may comprise any or any combination of a city or other geographical region, an end user device type, an end user device operating system, age of end user, etc.

In some examples, each end user profile comprises a binary feature vector, wherein each element of the binary feature vector is representative of an attribute of the associated end user and is associated with a value of 0 or 1. In other examples, features may be stored in categories as feature-value pairs or in any other format. In some such examples, a binary feature vector may be derived from a profile stored in a non-binary configuration by the processing circuitry 104 (for example by the control group module 106), as described hereinafter.

In some examples, the end user profiles may be encoded using 'one-hot' encoding. One-hot encoding comprises a binary representation of categorical variables. At least one category is assigned a binary code. For that category, one bit is activated and set to 1, while all other bits are set to 0 for that category. For example, if there are three possible values for the feature "city" - London, New York or Paris - then using the one-hot-encoding system, the processing circuitry executing the method (e.g. control group module 106) may represent London as a binary feature vector [1, 0, 0], New York as a binary feature vector [0, 1, 0], and Paris as a binary feature vector [0, 0, 1]. In some examples, the end user profiles may be stored in some other form (e.g. feature-value pairs), and may be converted using one-hot encoding (for example by the control group module 106). In some examples, the end user profiles may comprise a plurality of one-hot vectors, each vector relating to a different category.

The control group module 106 is configured to receive, from each end user device of an exposed group of end user devices, an exposure notification indicating that predetermined data has been exposed to a user (or end user) thereof. The exposure notification comprises an identifier of an exposed end user. The identifier comprises one or more of a device identifier of an end user device of the end user, a unified identifier created by an identifier provider and configured to identify the end user, and another identifier configured to identify the end user. For example, the unified identifier comprises one or more of a Trade Desk Unified ID 2.0 identifier provided by The Trade Desk of Ventura, California (www.thetradedesk.com), and a LiveRamp ID provided by LiveRamp of San Francisco, California (www.liveramp.com).

An 'exposed end user' is therefore an end user to whom certain data, i.e. the predetermined data, has been exposed, and an 'exposed group' or 'exposed end user group' is a group of exposed end users from which a notification is received, and who have, by implication, been exposed to the predetermined data via their respective device.

For example, the predetermined data may be sent to a first plurality of end user devices. For example, the end user device may comprise any or any combination of a phone, a tablet, a desktop computer, a laptop computer, a connected television or the like. The end user devices may be associated with an end user identifier, identifying a user thereof, and therefore with an end user profile associated with the end user identifier. This identifier may provide the identifier of an exposed end user included in the exposure notification.

The predetermined data may comprise any information which is of potential interest or use to an end user of the end device. For example, the predetermined data may comprise data concerning the device itself, including at least one state of the device, or setting out instructions for an end user interaction with the device, or may comprise data which is intended to encourage the user to act in a predetermined manner, or provoke a predetermined response or range of responses. The predetermined data may be sent over a wired or wireless connection. The predetermined data may be for display on the user device (which may comprise a screen or the like). Alternatively or additionally, the predetermined data may be exposed in some other way, e.g. audibly or as a tactile or haptic signal (for example a vibration of the end user device or the like). The predetermined data may comprise a data item or data content which is sent to each of a plurality of users. The predetermined data may be sent to the end user devices in a form which is at least partially, or at least substantially, consistent between end user devices. For example, each time the predetermined data is disseminated, it may convey the same or similar information, e.g. the same, or similar, textual, visual and/or image-based information. However, in some examples, a specified format, size, form factor or like of the predetermined data may be different, for example based on a user device to which it is to be sent. The predetermined data may alternatively be referred to as 'particular data', or as 'a particular data item', or as 'a predetermined data item'.

The control group module 106 may be further configured to store the exposed end user identifiers. For example, the control group module 106 may cause the exposed end user identifiers to be stored in the MRM 102 or in some other memory which is accessible locally or over a network to the control group module 106.

In some examples the predetermined data exposed to the exposed group of end users comprises tracking code, e.g. a 'tracking pixel', tracking tag, cookie or some other data tracking means which is configured to trigger an end user device, upon exposure of the predetermined data by the device to the end user, to send an exposure notification to the measurement platform 100. For example a tracking pixel may comprise a transparent pixel that, when displayed on an end user device, automatically triggers an HTTP notification indicative that the predetermined data has been displayed, and to send an identifier. Alternatively, or additionally, notification may be provided in some other way, such as by end user input (e.g. a 'click' to acknowledge receipt or display of the predetermined data), or by monitoring software deployed on the end user device which is capable of recognising the predetermined data and providing a response.

The control group module 106 is further configured to determine user profiles associated with the 'exposed end user' identifiers. For example, the identifiers may be used to look up the associated user profiles. In some examples, the user profiles may be initially held in a remote, or bulk memory, and may be stored in the MRM 102 in response to being identified via the identifier, for example being transferred over a network and/or over a data bus, or the like. For example, a remote or bulk memory may comprise non-volatile memory and the MRM 102 may comprise volatile memory. However, in other examples, a plurality of user profiles may be stored in the MRM 102 and the user profiles associated with the stored exposed end user identifiers may be identified therefrom. In some examples, the control group module 106 may convert user profiles associated with the exposed end user identifies to a binary form, and/or using one-hot encoding to provide a binary feature vector encoded using one-hot-encoding. This may be carried out if the user profiles are not stored as binary feature vectors encoded using one-hot-encoding.

The control group module 106 is further configured to determine, based on the profiles, a control group of user identifiers. The control group is determined so as to be made up of end user profiles associated with similar features to the exposed group but not comprising the exposed end user identifiers. In this example, 'similar' may mean that each feature is seen a similar number of times in each group. This may for example be evaluated as a maximum predetermined numerical or percentage difference. For example, the control group of end users may have similar statistical properties to the exposed group except that the control group members ("control users") have not been exposed to the predetermined data. This may be evaluated based on at least a subset of features associated with end users. In some examples, determining the control group may be carried out so as to result in a similar proportional representation of at least a subset of the features. In some examples, 'similar' may mean that the control group is determined in a manner which tends to reduces or minimises differences in a representation (e.g. proportional representation) of at least one feature between the groups, given a set of available candidate control group members. In other words, "determining a control group of user identifiers associated with profiles comprising similar features to the features associated with the exposed end user identifiers" may mean determining the control group so as to promote or enhance similarity or conformity therebetween. In some examples, determining the control group such that it is made up of end user profiles associated with similar features to the exposed group comprises determining the control group such that the control group iteratively grows in a manner which tends to reduce or minimise differences in a proportional representation of at least one feature between the groups for each iteration, given a set of available candidate control group members. In relation to attributes of the users or of end user devices, this may comprise identifying control group members with corresponding attributes. In some examples, features may relate to behaviours, and determining control group members may comprise determining control group members who display corresponding behaviours. For example, if the predetermined data was delivered via a particular app or browser, a corresponding attribute in the control user group may be another user of that app/browser.

Not all features included in the profiles need be considered in all cases. In some examples, a predetermined subset may be considered when determining the control group. Alternatively or additionally, a set of features to be considered may be determined following analysis of the exposed group, such that, for example, the nth most prevalent features in the exposed group are considered when determining the control group.

Moreover, all or a subset of the exposed users may be considered when determining the control group.

In some examples, in order to determine the control group, the control group module 106 may first identify a control pool of user identifiers associated with profiles (a "control group pool"). The control group pool and/or the associated user profiles may be already stored in the MRM 102 or may be retrieved to the MRM 102 from a remote or bulk memory, e.g. via a data bus or via a network. The control group pool may be selected so as to exclude exposed end users. In some examples the size of the control group pool may be determined based on the size of the exposed group of end users. For example, the control group pool may be determined to be at least 10 times larger, or 20 times larger, or 100 times larger than the exposed end user group. In some examples, the control group pool may be between 10 to 100 times larger than the exposed end user group. As will be appreciated from the description that follows, the processing resources to execute the methods of certain embodiments herein may increase with the size of the control group pool. However, conversely, the probability of obtaining a more accurate match between the characteristics of the control group and the characteristics of the exposed group of end users may also increase with the size of the control group pool. Therefore there is a trade-off between accuracy and processing resources.

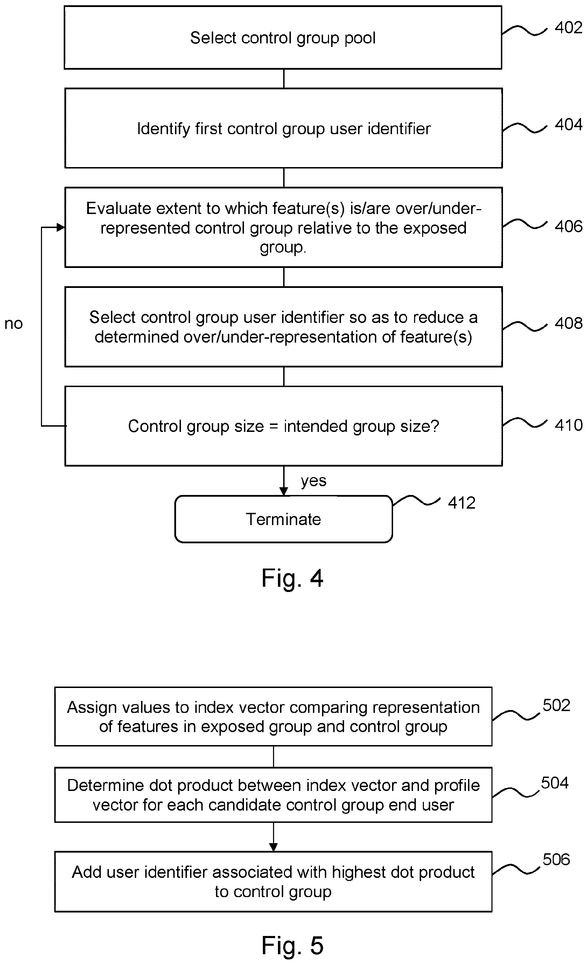

In some examples, the control group pool may be selected on a random basis. In other examples, the selection of end user profiles for inclusion in the control group pool may be, at least in part, deterministic. For example, the control group pool may be determined such that, if one or more predetermined feature/characteristic is absent from the exposed end user group profiles, that feature is also absent from the control group pool. In some examples, this may be due to predetermined criteria for disseminating the predetermined data or it may be determined after the fact from the exposed end user profile set. However, in other examples, these profiles may be effectively excluded from selection by means of an algorithm, for example as described below with reference to Figure 5. In a further example, the control group pool may be determined according to a rule, such as selection of every mth user identifier, where m is an integer, and may be configurable.

The control group is selected from available end user profiles (e.g. a control group pool, or all stored end user profiles) so as to provide control group user identifiers associated with similar profile features to the set of end users of the exposed end user group (but excluding exposed end users). For example, this may comprise selecting profiles which match the profiles of the exposed user group on a pairwise basis or minimising a function characterising the differences between the groups. In some examples, a plurality of candidate control groups may be created and tested relative to the exposed user group such that a 'most similar' or 'sufficiently similar' control group may be identified and selected.

In particular examples, however, the control group may be built up in an iterative manner so as to minimise and/or correct discrepancies between an existing control group and the exposed group. Such methods may be particularly effective in efficiently reducing differences between the groups and may allow a control group to grow as the exposed group grows. For example, a control group may be periodically reviewed and added to as an exposed group grows (for example, after a predetermined time period). This may avoid a need to re-initialise and/or build a control group 'from scratch' as an exposed group grows over time, increasing efficiency of a process for providing a control group. In other words, the exposed group and the control group may grow, at least to some extent, in 'lock step' with one another.

In some examples, the control group module 106 may be configured to select at least one control group user identifier as comprising an initial part or member of a control group. For example, this may be a single user profile. This may be selected randomly or deterministically. In some examples, deterministic selection may comprise selection of, for example, a first user profile in a list. In other examples, the selected user profile may be selected so as to be a pairwise match for one of the exposed end user profiles. In other examples, a first profile may be predetermined. In some examples, a set of profiles may be selected using any of these techniques. The selected set of profiles in such an initialisation phase may be smaller, for example significantly smaller, than the intended size of the control group. As will be appreciated from the discussion which follows, the control group may then be iteratively added to so as to correct or reduce 'errors' associated with discrepancies between the set of profiles in the exposed group and the set of profiles associated with the control group. In other examples, algorithms such as those outlined below may operate with a control group of zero size.

In some examples, once an initial profile or (relatively small) set of profiles has been selected, the control group may be added to. This process may be carried out iteratively. In some examples, this may comprise, by the control group module 106, comparing a representation of at least one feature in the control group to the representation of the at least one feature in the profiles associated with the exposed group. The representation may for example comprise an absolute number of times a feature occurs in each of the groups, or a proportional representation of the feature in the groups.

In some examples, the control group module 106 may be configured to determine a measure of a difference between the representation of features in the selected control group relative to the exposed group. The control group module 106 may be configured to determine an extent to which the at least one feature is overrepresented or under-represented in the selected control group relative to the exposed group. For example, this may comprise determining a difference between a number of times a particular feature is represented (e.g. the number of end user devices associated with a city designation of 'Paris') in the exposed group and the number of times the same feature is represented in the control group. In other examples this may comprise determining a ratio of the number of times at least one feature occurs in the exposed group compared to the control group, or the ratio of the proportion of times a particular feature occurs in the exposed group compared to the control group. In such examples, the control group module 106 may be further configured to select a further user identifier to comprise part of the control group, for example by selecting from the control group pool, so as to reduce or minimise a determined overrepresentation or underrepresentation of the at least one feature, or so as to increase a conformity between the features of the control group and the features of the exposed group, which may result in a control group having similar properties to the exposed group.

Such a process may continue until the control group reaches an intended size. For example, the intended size may be the same as, or within a predetermined margin of, the size of the exposed group.

A particular example of selecting a control group which can result in a close match between the exposed end user group and the control end user group, while avoiding undue data processing requirements, is described in greater detail in relation to Figure 5 below.

In some examples, while or after such a first control group is defined, the predetermined data may be sent to further end users, who may provide exposure notifications, and therefore be added to the exposed group. In such cases, either on an on-going basis or periodically, the control group may be added to over time, growing as the exposed group grows. This may for example continue until the exposed group and/or the control group have reached a predetermined size and/or a predetermined time has passed, or the like. Examples in relation to this are discussed in greater detail below.

Once a control group has been determined in such a way, the survey module 108 is configured to send a request for a response to each of a plurality of surveyed end user devices associated with end user identifiers comprising at least a subset of the exposed end user identifiers and of the control group end user identifiers, wherein the request for a response comprises a request for a response to the predetermined data. For example, the request for a response may comprise a request for a response indicative of whether the end user recalls seeing the predetermined data, whether the end user is able to recall content of the predetermined data, an opinion or sentiment of the end user with respect to the content of the predetermined data, whether an action indicated by the predetermined data has been or is more likely to be taken and/or whether the end user's sentiments regarding the content of the predetermined data is changed.

The survey module 108 is further configured to receive a response to the request from each of a plurality of surveyed end users. For example, this may comprise a text or data input (e.g. a button click or the like) from the user. The request may for example comprise a request to the end user to send the response to the measurement platform 100 after completing a survey or the like. For example, the request for a response may comprise a request to the end user to click a "submit" button to send the response. When the user clicks the "submit" button, the user thereby triggers a hypertext transfer protocol (HTTP) request embedded within the request for response, the HTTP request configured to send the response to the measurement platform 100. The response may further comprise an end user identifier of the end user providing the response.

In some examples, the survey module 108 may record nil response when no response is received from a particular surveyed end user device, for example within a certain time period. In some examples, the response may comprise an indication of a positive or a negative response (e.g. yes or no). In some examples, the response may comprise an indication of a positive response, a negative response or a neutral response (e.g. yes, no or do not know).

The survey module 108 is further configured to compare a set of responses received from exposed end users with a set of responses received from control group end users. The survey module 108 may then determine, based on the comparison, an indication of an effect of the predetermined data on the exposed end users. For example, determining an effect of the predetermined data on the exposed end users may comprise determining a metric comprising one or more of a response ratio (how many users in each group responded, or a ratio of positive to negative responses), a response difference (e.g. how many users indicated a knowledge of the predetermined data in their response, at least implicitly), and an uplift. An uplift may be indicative of a change in an indication of a sentiment associated with the predetermined data between the groups, and may be determined as a ratio between (i) positive response rate in the exposed group and (ii) positive response rate in the control group, less one. A positive response rate may be determined as the number of positive responses divided by the sum of all responses. This value may be expressed as a percentage.

It will be appreciated that, generally, when testing of this nature is to be carried out, a control user group and an exposed user group may be determined in advance. However, as, at least in part, it may not be determined what users will actually receive the predetermined data, this may be suboptimal and may result in differences arising between the characteristics of the exposed group and the control group. In examples herein, the control user group is determined responsive to the indications received from the end user devices. This therefore provides an accurate indication of which end users have been actually exposed to the content of the predetermined data. Moreover, methods may be used to build a control group in a manner which promotes conformity or similarity between the groups whilst not requiring undue data processing requirements. As such, the result or effect of the predetermined data may be assessed objectively. This in turn supports an objective determination of whether the predetermined data has an intended impact or effect, thus promoting effective human/machine interaction.

In examples herein, at least some of the operations set out above may be carried out periodically for example as the predetermined data is sent to additional users and the size of the exposed user group grows. For example, the control group module 106 may iteratively update the control group as new exposure notifications are received. For example, there may be a control group update period, which may comprise a fixed period of time. For example, where the control group update period comprises a fixed period of time, the control group module 106 may update the control group on a regular schedule predetermined by the control group update period. For example, the control group update period may be equal to one hour or equal to 24 hours. Alternatively, or additionally, the control group update period equals zero, so the process becomes a continuous process. In other examples, the control group update period may be associated with other criteria, for example a number of exposed end users added to an exposed end user group. In some examples, the control group module 106 may perform its operations multiple times, after which the survey module 108 may perform its operations.

In some examples, the exposed group and/or the control group may continue to grow in size after at least one request for a response has been sent out. In such examples, an indicator or flag may be added to an end user profile, or otherwise associated with an end user identifier, when a request for a response is sent to the end user associated with the identifier. In subsequent iterations, before sending a request for response, it may be determined whether a request has previously been sent to that user. If so, no further request for a response may be sent to that user. In other words, a request for a response may be sent to a particular user following verification that a request has not previously been sent to that user. This may prevent multiple requests being sent to an end user, which is inefficient and may denigrate the user's experience.

In some examples, there may be a predetermined maximum time interval between notification from an exposed end user and sending a request for response to that end user. In such examples, the iterations of determining a control group may be carried out with a time interval which is shorter, and may be significantly shorter, than the predetermined maximum time interval between notification and sending a request. For example, the control group may be updated every 24 hours, and requests for a response may be sent thereafter, whereas the predetermined maximum time interval between notification and sending a request may be 7 days. This prevents requests for responses being unduly delayed, as users may become less likely to recall the predetermined data over time. Moreover, it prevents some users, who may have been sent the predetermined data relatively early in a timeframe, from inadvertently being sent a request for a response outside the predetermined time interval, even though such data may continue to be disseminated throughout (and even beyond) the time interval associated with such 'early' exposed end users.

Figure 2 shows an example of a system 200 comprising the measurement platform 100, which may have any of the features described above, a data dissemination module 202, a bulk storage 204 and a plurality of user devices 206.

In this example, the data dissemination module 202 is configured to send predetermined data to a first plurality of end user devices 206, each of which is associated with an end user identifier, identifying a user thereof, and therefore with an end user profile associated with the end user identifier. In some examples, the data dissemination module 202 is configured to select the first plurality of end user devices 206, for example based on at least one attribute of an end user profile associated with the identifier of that device. In some examples, the data dissemination module 202 may insert tracking code, e.g. a tracking pixel, into the predetermined data before it is disseminated. The tracking code (or an alternative mechanism as described above) may cause the end user device to send a notification directly to the measurement platform 100 when the predetermined data is exposed to an end user. In other examples, the notification may be sent to the data dissemination module 202, which may supply the notification to the platform 100.

While in this example, the data dissemination module 202 is shown to be separate from the platform 100, in other examples, the data dissemination module 202 may comprise part of the processing circuitry 104 of the platform 100.

In some examples, the platform 100 may be configured to send a notification to the data dissemination module 202 based on the indication of an effect of the predetermined data on the exposed end users. For example, this may comprise the indication itself, a recommendation, and/or an instruction to the data dissemination module 202. For example, a recommendation or instruction may comprise a recommendation or instruction to stop sending the predetermined data if the effect is not as intended. In other examples, this may comprise a recommendation or instruction to cause the data dissemination module 202 to change at least one of the content of the predetermined data, a time of day at which the predetermined data is sent, a feature set on which the end users to whom predetermined data is sent is based, or the like. In other examples, dissemination of the predetermined data may be increased depending on the indication. In this way, the effect of the predetermined data may be altered. In other examples, the platform 100 may directly control the dissemination of the predetermined data based on the indication.

For example, the indication may be compared to one or more thresholds and an action may be taken based on the comparison. For example, if the indication indicates that the effect of the predetermined data fails to meet a predetermined minimum threshold, a recommendation or automatic instruction to stop dissemination of the predetermined data may be sent (e.g. to the data dissemination module 202) or otherwise enacted. In some examples, an automatic instruction may be sent if the effect of the predetermined data fails to meet a first predetermined minimum threshold, and a recommendation for review may be sent if the effect of the predetermined data meets the first predetermined minimum threshold but does not meet a second predetermined threshold. In other examples, the continued dissemination of data may be dependent on the effect of the data meeting a predetermined threshold. In other examples, if the indication indicates that the effect of the data meets a particular predetermined threshold, dissemination of the predetermined data may be automatically increased, or a recommendation to that effect may be generated and sent (e.g. to the data dissemination module).

The bulk storage 204 may comprise memory from which profiles are retrieved, for example to analyse the exposed user group, or to form the control group. The bulk storage 204 may for example comprise non-volatile memory.

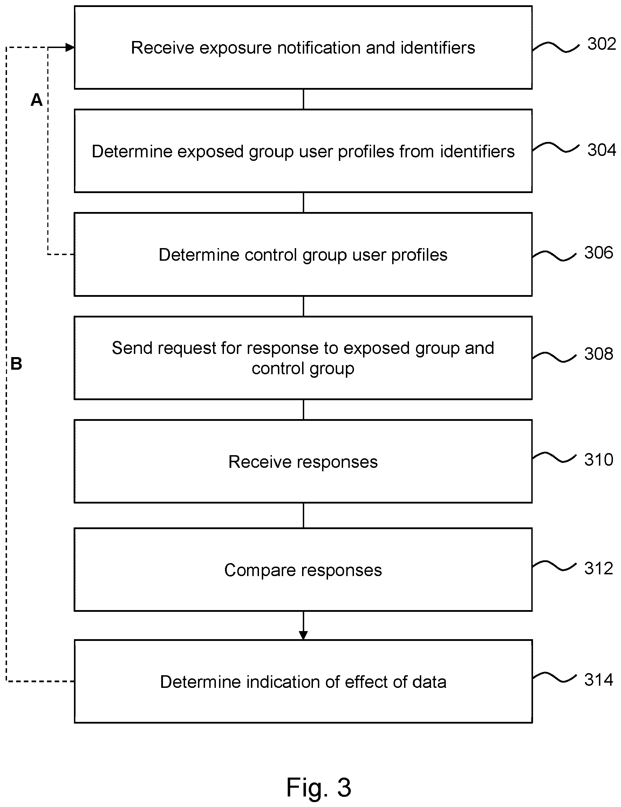

Figure 3 shows a flowchart of a method for determining a control group of end user devices which may be carried out by processing circuitry, for example the processing circuitry 104 of Figure 1. Prior to the method, predetermined data may be sent to each of a plurality of end user devices. As set out above, the predetermined data may comprise any information which is of potential interest or use to an end user of the end user device. The predetermined data may be sent over a wired or wireless connection. In some examples, the end user devices may comprise any or any combination of a phone, a tablet, a desktop computer, a laptop computer or the like. In some examples, the first plurality of end user devices may be selected, for example based on one or more characteristics of user profiles associated therewith. In some examples, tracking code may be inserted (e.g. a tracking pixel, tracking tag, cookie or the like) into the predetermined data prior to sending the predetermined data. Such tracking code may be configured to trigger an end user device, upon exposure of the predetermined data by the device to the end user, to send an exposure notification. In some examples, the predetermined data may be delivered via a web page or an application ("app").

Block 302 comprises receiving, from each end user device of an exposed group of end user devices, an exposure notification indicating that predetermined data has been exposed to a user thereof and comprising an identifier of an exposed end user, for example as set out above. The identifiers may be stored, for example on a local memory.

Block 304 comprises determining user profiles associated with the stored exposed end user identifiers, wherein each end user profile comprises a set of features associated with the end user, for example as set out above. The end user profiles may have the characteristics set out above. In some examples, these may comprise binary vectors, which may be formed utilising one-hot encoding. In some examples, matching end user profiles may be retrieved from a remote or bulk storage to a local memory or MRM. In other examples, the end user profiles may be stored in local memory.

Block 306 comprises determining, based on the profiles, a plurality of control group user identifiers with similar profile features to the exposed end user identifiers but not comprising the exposed end user identifiers. As described above, "determining control group user identifiers with similar profile features" in this context may mean that the plurality of control group user identifiers are identified in a manner which tends promote conformity, and/or reduce or minimise differences between the profile features associated with control group user identifiers and the exposed end user identifiers, for example being identified iteratively. In some examples, in order to determine the control group, the method may comprise identifying a control group pool as set out above. In some examples, the number of control group user identifiers identified at least approximately matches the number of exposed end user identifiers. Examples of selecting control group user identifiers are described in greater detail in relation to Figure 4 and 5 below.

In some examples, the method may loop back to block 302 at this point (loop A in Figure 3). For example, further end users may be added to the exposed group of end users, and therefore further end users may be added to the control group of end users, for example on a periodic basis, based on some other trigger or continuously. In this way, the size of the exposed group of end users and the size of the control group of end users grows alternately.

Block 308 comprises sending a request for a response to each of a plurality of end user devices associated with end user identifiers comprising (i) exposed end user identifiers and (ii) control group end user identifiers. In some examples, a request for a response may be sent to some or each of the end user devices associated with the exposed end user identifiers and the control group end user identifiers. The request for a response comprises a request for a response to the predetermined data, for example as described above in relation to the survey module 108.

Block 310 comprises receiving a response to the request from each of a plurality of surveyed end user devices, for example as described above. In some examples, if no response is received to a request for a response from a particular end user device, this may be noted as a nil response.

Block 312 comprises comparing a set of responses received from exposed end users with a set of responses received from control group end users, for example as set out above. In other words, a first portion of the responses (i.e. received responses, or nil responses and received responses) comprising responses relating to exposed end user devices is compared to a second portion of the responses, wherein the second portion of responses relates to the control group of end user devices.

Block 314 comprises determining, based on the comparison, an indication of an effect of the predetermined data on the exposed end users. For example, determining an indication of the effect of the predetermined data on the exposed end users may comprise determining a metric comprising one or more of a response ratio, a response difference and an uplift as set out above.

In some examples, the method may then loop back to block 302 (loop B in Figure 3).

In some examples, as described in relation to Figure 2 above, the indication of the effect of the predetermined data may be sent to an entity distributing or disseminating the predetermined data. Alternatively or additionally, a recommendation or instruction may be sent to cause the data dissemination entity to take action if the effect is not as intended. For example, the indication may be compared to one or more thresholds and an action may be taken or recommended based on the comparison. Such actions may comprise any or any combination of: stopping dissemination of the predetermined data, changing the content of the predetermined data, changing a time of day at which the predetermined data is sent, changing a feature set on which the end users to whom the predetermined data is sent is based, or the like. In other examples, the further dissemination of the predetermined data may be stopped or prevented unless the effect of the predetermined data is determined to meet predetermine criteria. If the criteria are met, further data corresponding to the predetermined data may be disseminated. For example, if the indication indicates that the effect of the predetermined data fails to meet a predetermined minimum threshold, a recommendation or automatic instruction to stop dissemination of the predetermined data may be sent (e.g. to the data dissemination module 202) or otherwise enacted.

In some examples, the method of Figure 3 may be carried out by the measurement platform 100 of Figure 1, and may comprise any additional operation(s) described in relation to Figure 1.

Figure 4 shows an example of a particular method of selecting a control group, which is implemented by processing circuitry (for example a control group module 106 as described in relation to Figure 1), and which may result in a control group which is similar to an exposed group.

In this example, in block 402, a control group pool is selected from available user profiles. In this example, user profiles may be added to the control group pool if they satisfy the condition of not being in the exposed user profile group. In some examples, other criteria may be applied, for example in relation to individual features. As described above, in some examples, profiles comprising features not represented in the exposed user group (either by design or as determined retrospectively) may be excluded from selection to the control group pool.

In block 404, a first control group user identifier is selected as comprising a first member of the control group. In this example, this comprises a step in initialising the control group. In this example, this is a single user profile which is selected randomly from the control group pool. However, in other examples, there may be one or more user profile which may be selected randomly or deterministically as set out above. In examples herein, the number of user profiles selected may be no greater than 1/10, or 1/100, of the intended size of the control group. Selecting one or a small number of profiles to initialise the group may allow a control group which more accurately resembles the exposed group to be formed. However, selecting a larger number of profiles to initialise the group may reduce the processing resources required to build the group. In other examples, algorithms such as those outlined below in relation to Figure 5 may operate with a control group of zero size.

Block 406 comprises evaluating an extent to which the at least one feature is overrepresented or under-represented in the selected control group relative to the exposed group. For example, this may comprise determining a difference between a number of times a particular feature is represented in the exposed group and the number of times the same feature is represented in the control group. In other examples this may comprise determining a ratio of the number of times at least one feature occurs in the exposed group compared to the control group, or the ratio of the proportion of times a particular feature occurs in the exposed group compared to the control group.

Block 408 comprises selecting a further user identifier to comprise part of the control group, for example by selecting from the control group pool, so as to reduce or to minimise a determined overrepresentation or under-representation of the at least one feature, given the control group pool. In some examples, this may comprise selecting an end user identifier which is associated with a profile having a feature corresponding to the most underrepresented feature in the group. In some examples, this may comprise testing each profile associated with the identifiers in the control group pool in turn. In such examples, the profiles may be evaluated to determine which identifier is associated with a profile which will best address any over- and/or under-representation of features in the control group, taken over the control group pool. In some such examples, that identifier may be selected to be added to the control group (and removed from the control group pool).

In this example, only one further user identifier is selected in block 408, but in other examples, a plurality of identifiers may be selected. Again, selecting one or a small number of profiles at a time may allow a control group which more accurately resembles the exposed group to be formed. However, selecting a larger number of profiles may reduce the processing resources required to build the group.

Block 410 comprises determining whether the control group size matches an intended size (which may be the exposed group size, or approximately the exposed group size). If so, the method terminates in block 412. Otherwise, the method loops back to block 406, and at least one further user identifier is added.

Figure 5 comprises an example of methods of carrying out blocks 406 and 408.

Block 502 comprises evaluating an extent to which at least one feature is overrepresented or underrepresented in the selected control group by assigning values to an index vector based on a comparison between (i) the representation of each feature within the profiles associated with the exposed group of end users and (ii) the representation of each feature within the profiles associated with a first set of control group end users.

In a particular example, the index vector comprises a measure of a difference between binary feature vectors representing profiles corresponding to the exposed end user identifiers ("exposed binary feature vectors") and the binary feature vectors representing profiles corresponding to the control end user identifiers ("control binary feature vectors"). The binary feature vectors comprise vectors encoded using 'one-hot' encoding. The index vector may be evaluated using equation (1):

$$\text{index\_vector}_i = \log\left(\frac{(\text{expCount}_i * \text{numConBFVectors})}{(\text{conCount}_i * \text{numExpBFVectors})}\right)$$

$$(1)$$

wherein:

expCount$_i$ = a count of 1's comprised in an ith element of the exposed binary feature vectors;
conCount$_i$ = a count of 1's comprised in respective ith element of the control binary feature vectors;
numConBFVectors = number of binary feature vectors comprised in the control group; and
numExpBFVectors = number of binary feature vectors comprised in the exposed group.

A number of elements comprised in the index vector is equal to a number of elements comprised in the binary feature vectors that the processing circuitry executing the method (e.g. control group module 106) uses to determine the index vector. In other words, in this example, each of the binary vectors characterising the profiles are of the same length and encoded in the same way such that that ith element represents the same feature in the profiles associated with the exposed group, the profiles associated with the control group and the index vector. In some examples, the vectors are encoded (e.g, by the control group module 106 described above) in a consistent manner.

An index vector element equal to 0 for a particular feature of interest indicates that this feature is equally represented in the control group and the exposed group. An index vector element value greater than 0 indicates that the feature of interest is under-represented in the control group relative to the exposed group. An index vector element value less than 0 indicates that the feature of interest is overrepresented in the control group relative to the exposed group.

Thus, determining the index vector evaluates the extent to which the features are over- or under-represented in the selected control group, and may be used to select which binary feature vector should be added to the group to ameliorate this over/under representation.

Pseudocode representing this process may be found in the Appendix hereto. However, as a worked, simplified, example, an exposed group comprises three binary feature vectors and a partially formed control group comprises two binary feature vectors. There are additionally two vectors which are part of a control group pool, i.e. candidate control group vectors.

In this example, the exposed binary feature vectors are {[0, 1, 0, 0, 1], [1, 0, 0, 1, 0], [1, 0, 0, 0, 1]}. In this example, the control binary feature vectors are [1, 0, 0, 1, 0], [0, 1, 0, 1, 0]. The candidate control pool vectors are {[0, 0, 1, 0, 1], [1, 0, 0, 0, 0]}

In this example, the first three elements of the binary feature vector comprise possible cities, London, New York, Paris. If the first element of the binary feature vector equals 1, this means that the city of the end user that corresponds to the binary feature vector is London. If the second element of the binary feature vector equals 1, this means that the city of the end user that corresponds to the binary feature vector is New York. If the third element of the binary feature vector equals 1, this means that the city of the end user that corresponds to the binary feature vector is Paris.

In this example, the fourth and fifth elements of the binary feature vector indicate a type of operating system of the user device, one or more of Android and iOS. If the fourth element of the binary feature vector equals 1, this means that the end user's operating system is Android. If the fifth element of the binary feature vector equals 1, this means that the end user's operating system is iOS. These vectors may therefore be summarised as follows:

| i | i=1 (London) | i=2 (New York) | i=3 (Paris) | i=4 (Android) | i=5 (iOS) |
|---|---|---|---|---|---|
| $Exposed_1$ | 0 | 1 | 0 | 0 | 1 |
| $Exposed_2$ | 1 | 0 | 0 | 1 | 0 |
| $Exposed_3$ | 1 | 0 | 0 | 0 | 1 |
| $Control_1$ | 1 | 0 | 0 | 1 | 0 |
| $Control_2$ | 0 | 1 | 0 | 1 | 0 |
| $Candidate_1$ | 0 | 0 | 1 | 0 | 1 |
| $Candidate_2$ | 1 | 0 | 0 | 0 | 0 |

In this example, the processing circuitry executing the method (e.g. control group module 106) has retrieved or created binary feature vectors that each comprise five elements. Therefore, the processing circuitry executing the method (e.g. control group module 106) determines an index vector that also comprises five elements. For example, the processing circuitry executing the method (e.g. control group module 106) determines the index vector using equation (1) and employing a logarithm, for example with a base comprising one or more of e, 10, and 2. In this example, base e is selected.

Here, the index vector may be determined as:

$$\ln[(2*2)/(1*3) , (1*2)/(1*3) , (0*2)/(0*3) , (1*2)/(2*3) , (2*2)/(0*3)]$$

There are various terms of interest here. In particular, the third element includes a zero value in the exposed group. This ultimately means that the logarithm of this value will be negative infinity. This may be approximated by a very large negative value in computing. Thus, in a first rule, a zero value in the exposed group will result in a large negative value for a corresponding element in the index vector. As is further set out below, this will result in it being a least highly unlikely that a vector representative of a feature set including a feature which is zero in the exposed group will be selected. It may be noted that the third element and the fifth elements also include a "divide by zero" in relation to the control group. In order to avoid the undefined nature of such a sum, in examples herein, this may be substituted for a high number (the second rule). In examples herein, the first rule takes precedence over the second rule, so applies in relation to the third element. The index vector may then be enumerated as:

$$\text{Index\_vector} = [0.29, -0.41. -X, -1.09, Y].$$

This shows that, for example, the first element is underrepresented in the current control group relative to the exposed group (a half vs two thirds). The second element is however overrepresented (a half vs one third). X represents a large number, such that -X is a value standing in for the log of 0, whereas Y is the log of the large number which is substituted for a term having a count of zero in the control group. X is significantly larger than Y.

The method further comprises, in block 504, determining a dot product between each of a plurality of candidate control group end user profile vectors and the index vector. In some examples a dot product is determined between the index vector and each binary feature vector comprised in the control group pool. For example the processing circuitry executing the method (e.g. control group module 106) iteratively works its way through each binary feature vector comprised in the control group pool, and for each one, computes a dot product of the index vector and the binary feature vector.

Thus, in this example, there are two vectors in the control group pool, i.e, candidate control group vectors, and the dot products may be calculated as follows:

Dot product with candidate$_1$:

$$[0.29, -0.41. -X, -1.09, Y]. [0, 0, 1, 0, 1] = 0 + 0 -X+ 0+ Y = Y-X.$$

As X is significantly larger than Y, this is a large negative value.

Dot product with candidate$_2$:

$$[0.29, -0.41. -X, -1.09, Y]. [1, 0, 0, 0, 1] = 0 + 0 -X+ 0+ Y = 0.29 + Y$$

The method further comprises, in block 506, adding the candidate control group end user associated with the highest dot product result to the first set of control group end users. This will result in candiate$_2$ being selected for inclusion in the control group as it results in the higher dot product numerically.

In examples where more than one candidate control group profiles result in the same score, these may be selected between at random (or a subset, or all, of the profiles may be added).

Therefore, block 504 and 506 together comprise an example of a method for carrying out block 408.

An advantage of the use of a logarithm function in the index vector ensures that in cases where there are no exposed users with a particular feature value then it is at least highly unlikely that there will be no control users added with that particular feature value, as the log of zero is -X, a large negative number.

This therefore allows a way for user profiles to be excluded from selection even if they are not excluded from a control group pool. This is a highly efficient manner of 'automatically' controlling for this possibility (assuming that there are better choices available in the control group pool, which may be controlled for statistically when determining the control group pool size) without requiring a systematic approach to prevent the inclusion of such profiles in the control group. Configuring the control group in this way may result in a more useful comparison, and/or may increase the safety or appropriateness of data distribution. For example, the predetermined data may be specific to a geographical region, or operating system, or may be intended to be viewed by adults only. As follow-up queries will be sent in relation to the predetermined data, it may be appropriate that these are only sent to end users to whom the predetermined data could have been sent, i.e. potential exposed end users.

Conversely, when a feature is represented in the exposed group and not in the control group, such as the fifth element in this example, it is associated with a positive value (the log of a large number) in the index vector, which strongly promotes its inclusion in the control group.

As in this example, the dot product is evaluated for each control group end user profile which is included in the control group pool, it may be seen that the size of the control group pool directly determines the processing required. However, determining a dot product is not unduly burdensome for processing circuitry and the more burdensome process of determining the index vector is carried out once only for each iteration.

Moreover, it may be seen that the method utilises available vectors to minimise a difference between the actual index vector and an ideal index vector, wherein the ideal index vector comprises a vector having a length equal to a length of the index vector, wherein each element of the ideal index vector equals 0.

In some examples, a single end user is added with each iteration. However, in other examples, a plurality of users may be added in an iteration, for example the N highest scoring profiles, wherein N is an integer, for example N= 1, or a number of the order of 5 or 10. Preferably however, N is relatively small compared to the size of the group in order to ensure that the control group and the end user group closely conform to one another in terms of size and characteristics.

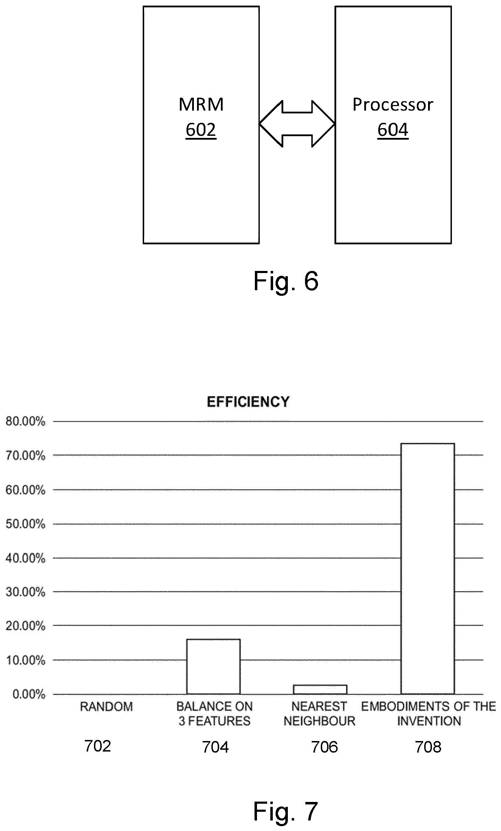

Figure 6 is an example of a machine readable medium 602 in communication with a processor 604. The machine readable medium 602 stores instructions which are capable of causing the processor 604 to carry out tasks. For example, the machine readable medium 602 may cause the processor 604 to act as the processing circuitry 104 of Figure 1, or as one or part of a module 106, 108 thereof, or as the data dissemination module 202 of Figure 2. In other examples the machine readable medium 602 may cause the processor 604 to carry out at least one block of the method of Figure 2, Figure 3 or Figure 4.

EXPERIMENTAL RESULTS

Real data was collected from disseminated predetermined data using embodiments of the invention and using three prior art methods. In this example, there were 4,000 exposed user identifiers.

The profile storage used for this experiment contains end user profiles for approximately 2 billion active end users. Each end user profile contains 52 features, for example, device type, location, device operating system, and the like. For each identifier in the exposed group, an end user profile was retrieved. For the control group pool, 100,000 end user profiles were randomly selected. Each of the four processes, that is, the one using an embodiment of the invention and the three prior art methods, was run twenty times on the same exposed group. In each experimental run, the exposed group was the same, a different control pool was randomly chosen (and used for the four processes), and precisely the same four processes were applied in the twenty different runs. After completing the experimental runs, the results were averaged to produce Table 1 and Figure 7. Accordingly, the experimental results seen resulted from the superiority of embodiments of the invention and not from any other factor such as a chance selection of a control group pool that was not truly randomised. This experiment represents a realistic test of the performance relative to prior art methods when one is using embodiments of the invention utilising the index vector evaluated as set out about, adding control group members one at a time.

The prior art processes used were:

1. Random. The control group was formed from a random selection of 4,000 end user profiles from the control group pool. This provides a lower bound for performance against which to measure the performance of the other processes. For a large enough number of end user profiles, the efficiency of the prior art random process will be 0%, as was found in this experiment. The prior art random process simply uses a random selection of a large number of end user profiles from the control pool so the efficiency of the prior art random process can be expected to be zero.

2. Balanced matching of three features. Within the exposed group, the three most discriminatory features were chosen. These are the features that divide the population into the highest number of groups wherein no single feature value applies to more than 50% of the exposed group. The control group is built using a small set of features, such as age, gender and location. All other features are ignored.

3. Nearest neighbour. End user profiles were chosen one by one from the exposed group. The control pool was searched for the closest end user profile to an exposed user as measured by the Manhattan distance. This closest control group profile was then added to the control group.

Performance was measured by the absolute difference between the count of the number of values of each feature in the control group compared to the number in the exposed group. For example, take the feature city=New York, If the count in the control group was 20 and the count in the exposed group was 22, then the difference is 2. Counts were summed across all values of all features in the data to obtain a total equalling a raw absolute difference. Additionally, a difference per control group member in the count of the number of values of each feature was calculated. This last quantity can be thought of as the number of differences per binary feature vector. Lastly, an efficiency was calculated as:

$$\text{efficiency} = 1 - \text{abs\_diff} / \text{abs\_diff\_random},$$

where:

abs_diff = the total number of differences between counts of every feature in the binary feature vectors of the control group and the exposed group. This numerator is determined according to each of the three prior art techniques and using embodiments of the invention;

abs_diff_random = the total number of differences between counts of every feature in the binary feature vectors of the random control group and the exposed group. This denominator has the same value when computing efficiency for each of the three prior art techniques and for embodiments of the invention;

efficiency = 0% means the performance was no better than random, and

efficiency = 100% means the control group was identical to the exposed.

Table 1 provides the experimental results.

| | Random | Balance on 3 features | Nearest neighbour | Embodiments of the invention |
|---|---|---|---|---|
| **abs diff** | 15967 | 13417 | 15568 | 4237 |
| **diff per profile** | 3.99 | 3.35 | 3.89 | 1.06 |

(continued)

|  | Random | Balance on 3 features | Nearest neighbour | Embodiments of the invention |
|---|---|---|---|---|
| efficiency | 0.00% | 15.97% | 2.50% | 73.47% |

Figure 7 is a bar graph representing graphically the experimental results of the experiment measuring performance of embodiments of the invention relative to the three prior art processes and demonstrating superior performance of embodiments of the invention. A perfect process would generate an efficiency of 100%. The random process 702 has an efficiency of 0%. The process of balanced matching of three features 704 has an efficiency of 15.84%. The nearest neighbour process 706 has an efficiency of 2.32%. Embodiments of the invention 708 exhibit an efficiency of 73.44%, a vast improvement over the efficiency of the three other exemplary processes.

CONCLUDING REMARKS

An advantage of at least some embodiments of the invention is that the novel use of the index vector ensures that if, at any point, there is bias between the control and exposed group (for example, if the control group has a greater proportion of end users with a certain brand of mobile phone than the exposed group has), then the next addition to the control group will be an end user profile that eliminates this bias as far as possible.

An advantage of embodiments of the invention is that the effect of the predetermined data can be objectively measured.

Another advantage of at least some embodiments of the invention is that the effect of the predetermined data can be objectively measured, in real-time.

Another advantage of at least some embodiments of the invention is that by measuring the effect of the predetermined data, the predetermined data can be one or more of adjusted and optimised to maximise the effect thereof. This can enhance the message associated therewith, e.g. enhance a safety message, or a message instructing an interaction with the end user device or the like. A further advantage of embodiments of the invention is that the one or more of adjustment and optimisation can happen in real time. This can be done, for example, by changing the target audience, changing the time of day at which s the predetermined data is exposed to end users etc., or by stopping dissemination of ineffective data.

Another advantage of at least some embodiments of the invention is that the measurement platform provides measurement of the effect of predetermined data using a control group which has been shown in experimental tests included in this application to be more accurate than other methods to select a control group.

Another advantage of at least some embodiments of the invention is that the measurement platform can update the control group in an incremental way. That is, as more people are exposed to the predetermined data, so the control group may grow in lockstep, without the need for redetermination of the control group from scratch each time the control group needs to be updated.

Another advantage of at least some embodiments of the invention is that the novel use of a logarithm function in the index vector means that, that in cases where there are no exposed users with a particular feature value (for example, data may be geographically targeted for legal reasons) then it is ensured, or is at least unlikely, that there will be no control users with that particular feature value. By contrast, this advantage is not achievable using methods such as nearest neighbour.

A further advantage of at least some embodiments of the invention is that by selecting a best control binary feature vector having a maximum value of the dot product, the processing circuitry executing the method (e.g. control group module 106) ensures that the next binary feature vector chosen is the binary feature vector than minimises any difference between the exposed and the growing control group.

Any logic or application described herein that comprises software or code can be embodied in any non-transitory machine- readable or computer-readable medium for use by or in connection with an instruction execution system (e.g. one or more processors) in a computer system or other system. In this sense, the logic may comprise, for example, statements including instructions and declarations that can be fetched from the computer-readable medium and can be executed by the instruction execution system. In the context of the present disclosure, a machine-readable medium or computer-readable medium can be any medium that can contain, store, or update the logic or application described herein for use by or in connection with the instruction execution system. For example, the machine-readable medium or computer-readable medium may comprise one or more of random access memory (RAM), read-only memory (ROM), hard disk drive, solid-state drive, USB flash drive, memory card, floppy disk, optical disc such as compact disc (CD) or digital versatile disc (DVD), magnetic tape, and other memory components. For example, the RAM may comprise one or more of static random access memory (SRAM), dynamic random access memory (DRAM), magnetic random access memory (MRAM), and other forms of RAM. For example, the ROM may comprise one or more of programmable read-only memory (PROM), erasable programmable read-only memory (EPROM), electrically erasable programmable read-only memory (EEPROM), and other forms of ROM.

The Appendix contains pseudocode for the method to update an exposed group comprising end users that have the predetermined data and to update a control group with control group members having similar statistical properties to members of the exposed group except that the control group members have not seen the predetermined data.

While the above representative embodiments have been described with certain components in exemplary configurations, it will be understood by one of ordinary skill in the art that other representative embodiments can be implemented using different configurations and/or different components. For example, it will be understood by one of ordinary skill in the art that the order of certain steps and certain components can be altered without substantially impairing the functioning of the invention.

The representative embodiments and disclosed subject matter, which have been described in detail herein, have been presented by way of example and illustration and not by way of limitation. It will be understood by those skilled in the art that various changes may be made in the form and details of the described embodiments resulting in equivalent embodiments that remain within the scope of the invention. It is intended, therefore, that the subject matter in the above description shall be interpreted as illustrative and shall not be interpreted in a limiting sense.

APPENDIX

Following is pseudocode for the method and system, using a measurement platform, to update a control group with control group members having similar statistical properties to members of an exposed group except that the control group members have not seen a data item (i.e. the predetermined data) and the exposed group members have seen the data item. Explicitly, it shows a practical encoding of equation (1) to determine the index_vector.

```
def calc_ index_vector(expCoiunts, conCounts, numExpBFVectors,
numConBFVectors):
    for i in range(len(index_vector)):
        rrExp = 1.0 * expCounts[i] / numExpBFVectors
        rrCon = 1.0 * conCounts[i] / numConBFVectors
        if rrExp == 0.0:
            index_vector[i]  = -1.0e32 # approximates ln(0)
        elif rrCon == 0:
            index_vector[i]  = ln(1.0e32) #Big value to avoid division by zero
        else:
            index_vector[i]  = ln(rrExp / rrCon)


    return index_vector
```

where:

- index_vector is the index vector being determined
- len(index_vector) is the number of elements of the actual index vector. This is equal to the number of elements in the binary feature vectors
- numExpBFVectors is the number of binary feature vectors in the exposed group
- numConBFVectors is the number of binary feature vectors in the control group
- index_vector[i] is the index value for the ith binary feature

**Claims**

1.   A measurement platform (100) comprising a memory (102) and processing circuitry configured to provide a control group module (106) and a survey module (108), wherein:

the memory (102) comprises profile storage configured to store a plurality of end user identifiers associated with end user profiles, each end user profile comprising a set of features associated with the end user;
the control group module (106) is configured to:

receive, from each end user device of an exposed group of end user devices, an exposure notification indicating that predetermined data has been exposed to a user thereof and comprising an identifier of an exposed end user;
determine user profiles associated with exposed end user identifiers; and
determine, based on the profiles, a control group of user identifiers associated with profiles comprising similar features to the features associated with the exposed end user identifiers but not comprising identifiers of the exposed end users; and

the survey module (108) is configured to:

send a request for a response to each of a plurality of surveyed end user devices associated with end user identifiers comprising exposed end user identifiers and control group end user identifiers, wherein the request for a response comprises a request for a response to the predetermined data;
receive a response to the request from each of a plurality of surveyed end user devices;
compare a set of responses received from exposed end users with a set of responses received from control group end users; and
determine, based on the comparison, an indication of an effect of the predetermined data on the exposed end users.

2. The measurement platform of claim 1 wherein the control group module (106) is configured to determine the plurality of control group user identifiers to comprise similar features by:

selecting at least one control group user identifier as comprising part of a control group;
evaluating a measure of a difference between the representation of features in the selected control group relative to the exposed group;
selecting a further user identifier to comprise part of the control group so as to reduce or minimise a determined difference.

3. The measurement platform of claim 2 wherein the control group module (106) is configured to evaluate the measure of the difference by evaluating an extent to which the at least one feature is over represented or underrepresented in the selected control group relative to the exposed group by assigning values to an index vector representing a plurality of features of the profiles based on a comparison between (i) the representation of each feature within the profiles associated with the exposed end users and (ii) the representation of each feature within the profiles associated with a first set of control group end users.

4. The measurement platform of claim 3 wherein the index vector is evaluated according to an equation:

$$\text{index\_vector}_i = \log\left(\frac{(\text{expCount}_i * \text{numConBFVectors})}{(\text{conCount}_i * \text{numExpBFVectors})}\right)$$

wherein:

numConBFVectors = number of binary feature vectors representing profiles corresponding to the control end user identifiers comprised in the control group;
numExpBFVectors = number of binary feature vectors representing profiles corresponding to the end user identifiers comprised in the exposed group$\text{expCount}_i$ = a count of 1's comprised in an ith element of the exposed binary feature vectors; and
$\text{conCount}_i$ = a count of 1's comprised in respective ith element of the control binary feature vectors.

5. The measurement platform of claim 3 or claim 4 wherein the index vector comprises a plurality of elements, each associated with a feature, wherein:

an element value of 0 for a feature of interest indicates that the feature is equally represented in the control group and the exposed group,

an element value greater than 0 indicates that the feature of interest is under-represented in the control group relative to the exposed group, and

an element value less than 0 indicates that the feature of interest is overrepresented in the control group relative to the exposed group.

6. The measurement platform of any of claims 3 to 5 wherein the control group module is further configured to select the further user identifier to comprise part of the control group by:

determining a dot product between each of a plurality of candidate control group end user profile vectors and the index vector;

adding the candidate control group end user identifier associated with the highest dot product result to the control group.

7. The measurement platform of any preceding claim further comprising a data dissemination module (202) configured to:

send the predetermined data to a first plurality of end user devices.

8. The measurement platform of claim 7, wherein the data dissemination module (202) is configured to insert tracking code into the predetermined data prior to sending the data to the first plurality of end user devices, wherein the tracking code is to cause each end user device to send the exposure notification when the data is exposed to the end user thereof.

9. The measurement platform of any preceding claim wherein the measurement platform (100) is configured to:

send the indication of the effect to a data dissemination entity; and/or
send a recommendation based on the indication to a data dissemination entity; and/or;
cause at least one of the following, based on the indication of an effect of the data on the exposed end users:

stopping dissemination of the predetermined data,
changing of a content of the predetermined data,
changing of a time of day at which the predetermined data is sent,
changing of a feature set on which the end users to whom the predetermined data is sent is based;
causing the predetermined data to be further disseminated.

10. The measurement platform (100) of any preceding claim, where the control group module (106) is further configured to convert user profiles using one-hot encoding prior to determining the control group user identifiers.

11. The measurement platform of claim 10, where the control group module (106) is configured to convert, using one-hot encoding:

i. profiles associated with exposed end user identifiers; and
ii. profiles associated with candidate control group user identifiers.

12. The measurement platform of any preceding claim, where the control group module (106) is further configured to determine a control group pool comprising a plurality of candidate control group user identifiers.

13. The measurement platform of claim 12 wherein the size of the control group pool is determined based on the number of exposed end user identifiers.

14. The measurement platform of any preceding claim, wherein each end user profile comprises a binary feature vector, wherein each element of the binary feature vector is representative of an attribute of the associated end user and is associated with a value of 0 or 1.

15. The measurement platform of any preceding claim wherein the control group module (106) iteratively updates the control group as exposure notifications are received.

16. The measurement platform of any preceding claim wherein determining, based on the comparison, an effect of the data on the exposed end users comprises determining a metric comprising one or more of a response ratio, a response difference, and an uplift.

17. A method for determining a control group of end user devices comprising, by processing circuitry:

receiving, from each end user device of an exposed group of end user devices, an exposure notification indicating that predetermined data has been exposed to a user thereof and comprising an identifier of an exposed end user; determining user profiles associated with the exposed end user identifiers, each end user profile comprising a set of features associated with the end user; determining, based on the profiles, a plurality of control group user identifiers associated with profiles comprising similar features to the features associated with the exposed end user identifiers but not comprising the exposed end user identifiers; sending a request for a response to each of a plurality of surveyed end user devices associated with end user identifiers comprising exposed end user identifiers and control group end user identifiers, wherein the request for a response comprises a request for a response to the predetermined data; receiving a response to the request from each of a plurality of surveyed end user devices; comparing a set of responses received from exposed end users with a set of responses received from control group end users; and determining, based on the comparison, an indication of an effect of the predetermined data on the exposed end users.

18. The method of claim 17 wherein determining the plurality of control group user identifiers associated with profiles comprising similar features to the features associated with the exposed end user identifiers comprises: selecting at least one control group user identifier as comprising part of a control group; and, further comprising, iteratively and until a control group reaches an intended size:

evaluating an extent of a difference between the representation of features in the selected control group relative to the exposed group; selecting at least one further user identifier to comprise part of the control group so as to reduce a determined difference.

19. The method of claim 18, wherein evaluating an extent of a difference comprises evaluating an extent to which the at least one feature is overrepresented or underrepresented in the selected control group relative to the exposed group comprises assigning values to an index vector representing a plurality of features of the profiles based on a comparison between (i) the representation of each feature within the profiles associated with the exposed end users and (ii) the representation of each feature within the profiles associated with a first set of control group end users.

20. The method of claim 19 comprising evaluating an extent to which the at least one feature is overrepresented or underrepresented using the equation:

$$\text{index\_vector}_i = \log\left(\frac{(\text{expCount}_i * \text{numConBFVectors})}{(\text{conCount}_i * \text{numExpBFVectors})}\right)$$

wherein:

numConBFVectors = number of binary feature vectors representing profiles corresponding to the control end user identifiers comprised in the control group; numExpBFVectors = number of binary feature vectors representing profiles corresponding to the end user identifiers comprised in the exposed group; $\text{expCount}_i$ = a count of 1's comprised in an ith element of the exposed binary feature vectors; and $\text{conCount}_i$ = a count of 1's comprised in respective ith element of the control binary feature vectors.

21. The method of any of claims 17 to 20 wherein selecting the further user identifier to comprise part of the control group comprises:

determining a dot product between each of a plurality of candidate control group end user profile vectors and the index vector;

adding the candidate control group end user identifier associated with the highest dot product result to the control group.

22. The method of any of claims 17 to 21 wherein at least part of the method is performed iteratively such that the size of the exposed group of end user devices and the size of the control group of end users grow alternately.

23. The method of any of claims 17 to 22, comprising determining a control group pool comprising a plurality of candidate control group user identifiers.

24. The method of claim 23, wherein the size of the control group pool is determined based on the number of exposed end user identifiers.

25. The method of any of claims 17 to 24 comprising at least one of:

sending the indication of the effect to a data dissemination entity;
sending a recommendation or instruction based on the indication to a data dissemination entity;
causing, directly or as a result of an instruction sent to a data dissemination entity at least one of the following, based on the indication of an effect of the data on the exposed end users:

stopping dissemination of the predetermined data,
changing of a content of the predetermined data,
changing of a time of day at which the predetermined data is sent,
changing of a feature set on which the end users to whom predetermined data is sent is based;
causing the predetermined data to be further disseminated.

25. The method of any of claims 17 to 24, comprising inserting tracking code into the data prior to sending the predetermined data to the first plurality of end user devices, wherein the tracking code is to cause each end user device to send the exposure notification when the data is exposed to the end user thereof.

26. The method of any of claims 17 to 25, comprising selecting end user devices to which the predetermined data is sent based on at least one feature of an end user profile.

27. The method of any of claims 17 to 26 comprising converting user profiles using one-hot encoding prior to determining the control group user identifiers.

28. The measurement platform according to claim 27, comprising converting, using one-hot encoding:

i. profiles associated with exposed end user identifiers; and
ii. profiles associated with candidate control group user identifiers.

29. The method of any of claims 17 to 28 wherein determining, based on the comparison, an effect of the predetermined data on the exposed end users comprises determining a metric comprising one or more of a response ratio, a response difference, and an uplift percentage.

30. A non-transitory machine readable medium encoded with instructions which, when executed, cause a processor to carry out the method of any of claims 17 to 29.

Measurement Platform 100

MRM 102

Profiles 110

Processing Circuitry 104

Control Group
Module 106

Survey Module
108

## Fig. 1

Measurement Platform
100

Bulk
storage
204

Data Dissemination
Module 202

206

## Fig. 2

```
      ┌─────────────────────────────────────────────────┐
  ┌──→│    Receive exposure notification and identifiers │ ⟿ 302
  ┆   └─────────────────────────────────────────────────┘
A ┆   ┌─────────────────────────────────────────────────┐
  ┆   │  Determine exposed group user profiles from identifiers │ ⟿ 304
  ┆   └─────────────────────────────────────────────────┘
  └───┌─────────────────────────────────────────────────┐
      │      Determine control group user profiles        │ ⟿ 306
      └─────────────────────────────────────────────────┘
      ┌─────────────────────────────────────────────────┐
B     │  Send request for response to exposed group and   │ ⟿ 308
      │                   control group                    │
      └─────────────────────────────────────────────────┘
      ┌─────────────────────────────────────────────────┐
      │                Receive responses                   │ ⟿ 310
      └─────────────────────────────────────────────────┘
      ┌─────────────────────────────────────────────────┐
      │                Compare responses                   │ ⟿ 312
      └─────────────────────────────────────────────────┘
      ┌─────────────────────────────────────────────────┐
  ────│       Determine indication of effect of data       │ ⟿ 314
      └─────────────────────────────────────────────────┘
```

Fig. 3

| Select control group pool | 402 |

| Identify first control group user identifier | 404 |

| Evaluate extent to which feature(s) is/are over/under-represented control group relative to the exposed group. | 406 |

| Select control group user identifier so as to reduce a determined over/under-representation of feature(s) | 408 |

no

| Control group size = intended group size? | 410 |

yes

| Terminate | 412 |

## Fig. 4

| Assign values to index vector comparing representation of features in exposed group and control group | 502 |

| Determine dot product between index vector and profile vector for each candidate control group end user | 504 |

| Add user identifier associated with highest dot product to control group | 506 |

## Fig. 5

Fig. 6

Fig. 7

Europäisches
Patentamt

European
Patent Office

Office européen
des brevets

# EUROPEAN SEARCH REPORT

**Application Number**

EP 24 16 4190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/089455 A1 (BELANI ESHWAR [US] ET AL) 12 April 2012 (2012-04-12) * paragraph [0038] - paragraph [0056] * * paragraph [0073] * * paragraph [0082] - paragraph [0092] * * paragraph [0100] - paragraph [0101] * ----- | 1-30 | INV. G06Q30/0242 |
| A | US 2019/080352 A1 (MODARRESI KOUROSH [US] ET AL) 14 March 2019 (2019-03-14) * paragraph [0015] * * paragraph [0022] - paragraph [0023] * * paragraph [0043] * * paragraph [0057] * ----- | 10,11, 14,27,28 | |
| A | US 2012/166520 A1 (LINDSAY ROBERT TAAFFE [US] ET AL) 28 June 2012 (2012-06-28) * paragraph [0005] - paragraph [0006] * ----- | 8 | |

|  |
|---|
| TECHNICAL FIELDS SEARCHED (IPC) |
| G06Q |

The present search report has been drawn up for all claims

| Place of search | Date of completion of the search | Examiner |
|---|---|---|
| The Hague | 15 July 2024 | van Praagh, Kay |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 16 4190

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2024

| Patent document cited in search report | Publication date | Patent family member(s) | | Publication date |
|---|---|---|---|---|
| US 2012089455 A1 | 12-04-2012 | GB | 2498152 A | 03-07-2013 |
| | | US | 2012089455 A1 | 12-04-2012 |
| | | WO | 2012048244 A2 | 12-04-2012 |
| US 2019080352 A1 | 14-03-2019 | NONE | | |
| US 2012166520 A1 | 28-06-2012 | NONE | | |

EPO FORM P0459

For more details about this annex : see Official Journal of the European Patent Office, No. 12/82